# EUROPEAN PATENT APPLICATION

(11) **EP 4 310 392 A1**
(43) Date of publication of application: **24.01.2024**
(21) Application number: 22187020.7
(22) Date of filing: 26.07.2022
(51) Int. Cl.: F21V 33/00, F21V 8/00, G09F 9/305, E04F 13/08, E04F 15/02, E04F 15/08

(54) **NATURAL STONE PANEL WITH SURFACE LIGHTING PROPERTIES AND RESPECTIVE MANUFACTURING PROCESS**

(30) Priority: 22.07.2022 PT 2022118124
(71) Applicant: CENTITVC - Centro de Nanotecnologia e Materiais Tecnicos, Funcionais e Inteligentes, 4760-034 Vila Nova de Famalicão (PT); Solancis - Sociedade Exploradora de Pedreiras S.A., 2475-016 Benedita (PT)
(72) Inventor: Oliveira da Silva, José Fernando, 4760-034 Vila Nova de Famalicão (PT); Fernandes da Silva Andrade Leite, André Filipe, 4760-034 Vila Nova de Famalicão (PT); Rodrigues Campanhã, Daniela Cristina, 4760-034 Vila Nova de Famalicão (PT); Costa Delgado, Samuel, 2475-029 Benedita (PT); Paulino da Silva, Nelson Manuel, 2480-055 Calvaria de Cima (PT)
(74) Representative: Patentree

(57) **Abstract**

The present disclosure relates to a natural stone panel with surface lightning properties and respective manufacturing process. This disclosure proposes a natural stone panel with a surface lightning for placing into direct contact with ground or wall, comprising: a support stone tile having front and back surfaces; a light source placed inside or behind said support stone tile, wherein the light source is selected from a list consisting of electroluminescent film or tape, light-emitting diode (LED), organic light-emitting diode (OLED), quantum dot light-emitting diode (QLED) stripe, or combinations thereof; at least one light channel created in the interior or behind of the said support stone tile allowing the passage of a light path coming from the light source to at least one opening on the front surface of said support stone tile and a light guide arranged in said light path for guiding light from said light source to the at least one opening.

## Description

### TECHNICAL FIELD

The present disclosure relates to a natural stone panel with surface lightning properties and respective manufacturing process.

### BACKGROUND

Several types of solutions can be found in the market where the introduction of LED lights for decorative effects in natural stone is observed. These projects are customized and made specifically for a single application, with companies that are dedicated exclusively to developing this type of solutions. There are also products with electroluminescent devices that are adapted and placed on natural stones. The solutions available on the prior art are individual solutions or adaptations in which the lighting and the stone to be illuminated are not designed together and thought of as a single product.

With regards to natural stone structures with integrated lighting, most systems are based on the formation of a cavity in the stone tile, designed to receive a light source, such as a light-emitting diode (LED), through a hole formed with uniform diameter of the visible side to the non-visible side.

Another possible approach is the use of optical fibres for this type of application. This requires at least one light source, and at least one optical fibre connected to the light source, all of which will be embedded within the natural stone. Thus, one end of the optical fibres will collect the light from the source and lead it to the other end, in order to be exposed on the stone, providing a series of visible points on the surface of the stone.

The document US20140333514 describes a structure, made of clay or cement, with embedded light guiding parts that allow for light signals or live images to appear on its surface. Specifically, there is a light system composed of an array of rods made in a hard transparent or translucent polymer material embedded in a building material. The tapered rods are held together by a backbone that connects the bases of the tapered rods, to achieve an evenly distributed array of tapered rods, preferably having the same orientation, wherein the rods are adapted to receive a light input at the base ends and to transmit the light output at the front ends of the rods. The preferred light source is a LED, powered by traditional AC electrical sources, electrical batteries or other powering source, such as solar, wind, or chemically or organically derived energy.

The document US6082886A describes an illumination system that can be used to incorporate light into pavement units or stone surfaces, and that is comprised of at least one illuminated paving block, with one or more light sources and one or more optical fibres, in communication with the light source, imbedded in the pavement unit. The optical fibres have one end facing the light source and the other end exposed at the top surface of the block, to create visible points of light. In conjunction with the light source and the optical fibres, the paving block also contains a circuit module for housing the light source and the hardware needed to connect the light source to an external electrical power source. The light source can be provided in any colour, and a timer system can be included to turn on or off the system.

The document CN2738092Y describes a self-illuminating assembling solid such as paver, running channel stone, building block, or statue, that is provided with optical fibres arranged in the containing piece, with one end of the optical fibre at a predefined position on the body surface. The assembled object is provided with self-illuminating seasonal pattern, informational text or advertisement, with a plurality of versicolor patterns being possible for a single object. In order to carry out a large-scale display, the light can be transmitted to one or more assembled solid object from one or more distal end light source.

The document CN101313417B describes light-emitting articles and methods of manufacturing such articles. In one aspect, a light emitting article includes an optical element having an input and an output aperture, each having a specific size, in which a LED die is optically coupled to the optical element, with a size that matches the output aperture size of the optical element. It also refers to an array of light-emitting articles that can either include an array of optical elements with a lapped input aperture surface, or an array of optical elements, and an array of LED dies, each LED die having a size, with each LED die optically coupled to an optical element at the input aperture.

These facts are described to illustrate the technical problem solved by the embodiments of the present document.

### GENERAL DESCRIPTION

The present disclosure relates to a natural stone panel with lighting capabilities, through the use of different lighting systems and light channels that pass through the stone tile. In some embodiments, associated touch system can be applied to the referred stone panel. Such lightning capabilities can be used for decorative and/or informative purposes.

The subject matter of the disclosure relates to a stone panel comprising a support stone tile having front and back surfaces with a light source, which can be a electroluminescent film or tape, light-emitting diodes (LEDs) stripe, organic light-emitting diode (OLED) stripe, quantum dot light-emitting diode (QLED) stripe or combinations thereof, depending if it is for a decorative or informative purpose, respectively, that is responsible for illuminating specific areas/points of the stone tile surface by making use of optic fibre elements that are present in the interior of the stone tile in order to create light channels that pass through the stone.

The subject matter of the disclosure also provides advantageous of having coupled a touch sensor that is responsible for actuating on the support stone tile, activating, deactivating or altering part of the information provided by the said light source.

This work was developed in the framework of INSTONE project, co-financed by the Operational Programme for Competitiveness and Internationalization (COMPETE 2020), under the PORTUGAL 2020 Partnership Agreement, through the European Regional Development Fund (ERDF).

This disclosure proposes a natural stone panel with a surface lightning for placing into direct contact with ground or wall, comprising: a support stone tile having front and back surfaces; a light source placed inside or behind said support stone tile, wherein the light source is selected from a list consisting of electroluminescent film or tape, light-emitting diode (LED), organic light-emitting diode (OLED), quantum dot light-emitting diode (QLED) stripe, or combinations thereof; at least one light channel created in the interior or behind of the said support stone tile allowing the passage of a light path coming from the light source to at least one opening on the front surface of said support stone tile and a light guide arranged in said light path for guiding light from said light source to the at least one opening.

In an embodiment, the light source of the natural stone panel is electroluminescent.

In an embodiment, the electroluminescent light source of the natural stone panel is a film or tape.

In an embodiment, the natural stone panel comprises a transparent or translucid layer arranged on the electroluminescent light source, to which the light guide is physically and optically coupled.

In an embodiment, the support stone tile of the natural stone panel is recessed in the back surface to receive the light source and light guide.

In an embodiment, the light guide of the natural stone panel is an optical fibre.

In an embodiment, the natural stone panel comprises a printed touch-sensitive circuit arranged on a polymeric layer on a back surface of said support stone tile, comprising a plurality of circuit tracks arranged to detect touch events on the support stone panel.

In an embodiment, the printed touch-sensitive circuit used with the natural stone panel has one or more openings and the light guide is arranged to go through one of the openings.

In an embodiment, the light source and/orthe printed touch-sensitive polymeric layer of the natural stone panel are coupled to a control printed circuit board.

In an embodiment, the natural stone panel comprises at least one terminal for connection between the light source and the control printed circuit board.

In an embodiment, the natural stone panel comprises a connector for connection of the terminal to the optical fibre.

In an embodiment, the natural stone panel comprises a power and hardware control located on the back of said support stone tile.

In an embodiment, the luminous flux of the light source of the natural stone panel is between 13.5 lumens and 126 lumens.

In an embodiment, the support stone tile and/or the optical fibres of the natural stone panel are coated.

In an embodiment, the natural stone panel comprises at least one rigid panel for maintaining the optical fibre in the right position.

In an embodiment, the optical fibre of the natural stone panel has a light attenuation along its length lower than 350 db/km, preferably between 100 - 300 db/km.

In an embodiment, the optical fibre of the natural stone panel has a polymeric base.

In an embodiment, the circuit tracks of the natural stone panel comprise silver, copper, or other metallic elements, or combinations thereof.

In an embodiment, the circuit tracks of the natural stone panel comprise materials with sheet resistivities comprised range between 10 mΩ/sq/mil and 20 mΩ /sq/mil.

In an embodiment, the support stone tile of the natural stone panel is a sedimentary rock, igneous rock, metamorphic rock, preferably limestone, travertine, marble, basalt, sandstone, gneiss, quartzite, slate, onyx, laterite or granite. Along the disclosure, it is considered that a stone tile is a stone block or slab used for tiling.

In an embodiment, the support stone panel of the natural stone panel comprises a porosity between 0,5% and 7%, preferably between 1% and 6%.

It is also disclosed a method for manufacturing a natural stone panel with a surface lightning for placing into direct contact with ground or wall, said method comprising: providing a support stone tile; opening at least one light channel created in the interior of the said tile; introduction of at least one light source in the back of said tile, wherein said light source is substantially aligned with the light channel to allow the passage of a light path.

In an embodiment, the method for manufacturing a natural stone panel, further comprises the steps of: printing a touch sensing layer on the surface of said tile, comprising a plurality of distributing tracks; curing of the pattern at temperatures comprised between 100°C and 150°C, for 10 to 20 minutes.

### BRIEF DESCRIPTION OF THE DRAWINGS

The following figures provide preferred embodiments for illustrating the disclosure and should not be seen as limiting the scope of invention.
**Figure 1****:** Schematic representation of the elements of the natural stone panel with a surface lightning, with a light source (1) and their integration into the support stone tile (2) through at least one optic fibre cable (5) connected to at least one terminal (3) and connector (4).
**Figure 2****:** Schematic representation of the printed circuit board with attached light source (1), connector (4) and optic fibre cable (5).
**Figure 3****:** Schematic representation of a support stone tile (2) to be used to pass a static image, in conjunction with a light source (not represented in the figure).
**Figure 4****:** Schematic representation of a cross section of the support stone tile (2) shown in the previous figure, allowing the viewing of the openings where the fibre optics (5) are placed.
**Figure 5****:** Schematic representation of a natural stone panel with a) various light points, turned on and off, in order to show values; and b) touch sensing points to control said values.
**Figure 6****:** Schematic representation of a natural stone panel with various light points turned on to show a decorative image.
**Figure 7****:** Schematic representation of the touch sensing elements applied to the support stone panel (not represented in the figure).

Throughout the figures indicated above, the following elements are indicated with the respective references:
1 - light source;
2 - support stone tile;
3 - terminal;
4 - connector;
5 - optic fibre cable.

### DETAILED DESCRIPTION

This disclosure relates to a natural stone panel with a surface lighting for placing into direct contact with ground or wall, for example, for decorative or information purposes. In a further embodiment, the natural stone panel with a surface lighting comprises a touch sensing system for controlling the lighting system, totally integrated inside the structure.

The lighting system of the said natural stone panel has as main components, a light source placed inside or behind the support stone tile, in places specifically prepared for this purpose, and at least one light channel, responsible for allowing the passage of light emitted by the light source, to at least one opening on the surface of said support stone panel.

The elements responsible for the light emission may be based on an electroluminescent film, yarn or tape, light-emitting diode (LED), organic light-emitting diode (OLED), quantum dot light-emitting diode (QLED) stripe, or combinations thereof depending on the functionality of the natural stone panel, for example as a decorative or informative piece. The use of LED technology makes it possible to obtain a natural stone panel with a decorative or informative purpose, and the information to be transmitted can be variable in the same natural stone tile. The use of electroluminescent technology, on the other hand, also allows a natural stone tile to be obtained with a decorative or informative function, but the information to be passed is static, being defined at the time of creation of the structure.

In the case where the light source is based on LED technology, the light-emitting elements are then light-emitting diodes, which may have one or more colours (RGB), and their size is not related to the dimensions of the channels responsible for routing the light from the emitting elements to the visible surface of the natural stone panel, as the LEDs are not inside that channel, but rather applied to a control printed circuit board responsible for controlling and changing the state of each LED.

As an example of LEDs that can be used, it is possible to mention the LEDs from LUMILEDS, reference L135-R625003500000, which are high-power LEDs, red in colour, more precisely, emitting in a wavelength between 620 and 630 nm, and with a luminous flux of 13.5 lumens.

Each of the LEDs is then coupled to the control printed circuit board and are then enclosed in terminals that allow the control of the illuminated area and the connection to connectors, which, in turn, allow the placement of optical fibres in close contact with the LEDs' emission surface, in order to maximize the efficiency of light transmission to the surface of the natural stone element.

The control printed circuit board should be prepared so as to have the necessary connection points to allow the correct and robust positioning of the terminals, which, for example, can be the terminals with reference 7461058, from Würth Elektronik, which have 10 pins for connection to the printed circuit board and a channel for light passage and connection to the connector, with a diameter of 10 mm.

As for the connector which is responsible for connecting the terminal to the fibre optics, it must be appropriate to allow a robust connection to the terminal and the introduction and fixing of more than one optic fibre inside, without damaging it. As an example of an appropriate connector, it is possible to mention the Hummel connector with the reference 1.106.1001.50, which has an internal channel with a diameter of 6 mm, allowing the placement of three optical fibres with a diameter of 3 mm inside.

The positioning of the optical fibres inside the connector should be carried out in such a way that the ends facing the light source, of each optical fibre, are at the same distance from said light source, in orderto produce a homogeneous illumination at each point of light, on the visible surface of the natural stone element.

Depending on the final function of the lighting elements inserted in the support stone tile, the distribution of the optical fibres has to take into account their final positioning in the structure and the light emitting element with which it is in contact.

In case the desire is to obtain a natural stone panel capable of transmitting variable information, for example, capable of presenting temperature or time values, each set of 3 optical fibres coupled to a light emitting element must be inserted in such a way that they create a single lighting segment on the stone surface. For the transmission, for example, of a single number on the surface of the stone, 21 optical fibres must then be used, coupled to 7 distinct LEDs, and arranged in a way that allows 7 separate segments to be obtained on the visible surface of the stone structure.

Another structural element necessary for the correct functioning of the complete lighting system, in particular for maintaining the correct position of the optical fibres, is the application of a coating, for example, epoxy resin, which, after curing, presents sufficient rigidity and adhesion to both the stone structure and the optical fibres, so as to be able to hold the latter in place.

In case the illumination is based on electroluminescent technology, one or more electroluminescent devices shall be applied on the back of the natural stone tile, occupying an area equal or larger than the area occupied by the image created by the light guides inserted in the natural stone tile. Each electroluminescent device can only emit light of a single colour, it being possible to create zones of different colours on the same device through the application of colour filters, however, this causes loss of luminous intensity, so its application is to be avoided, and the colour to be presented must be chosen taking into account this limitation.

To obtain a luminous intensity at the light points on the surface of the stone tile that is visible at a distance, enabling its use as a source of visual information, the electroluminescent device should have a luminous flux between 13.5 lumens and of 126 lumens, and its power should not exceed 0.25 W/cm².

In the case of structures with electroluminescent lighting, a coating to maintain the optical fibres in their correct position is not used, as they are totally inserted in the stone structure, this coating being replaced by two rigid panels, with one of them serving as an interface between the optical fibres and the electroluminescent devices, which must present high transmittance, and the other to be applied on the back of the electroluminescent devices, in order to serve as a protection layer. In both cases, acrylic sheets may be used, with the first one having a reduced thickness, not exceeding 2 mm, and high transmittance, and the second one being thicker and opaque.

In both cases of lighting technology, the elements for transmitting the lighting to the visible face of the stone structure are optical fibres. These must have a diameter of 3 mm, high flexibility, with a maximum bending angle of at least 30mm, and reduced light attenuation along its length, not exceeding 350 db/km. These optical fibres should have a polymeric base, in order to present the necessary flexibility and be easy to cut and place, for example, polymethylmethacrylate. They should also be highly durable, not less than IP68, in order to be able to withstand the conditions of use to which they will be subjected.

As for the touch sensing system, it comprises sensory structures that detect the touch or approach of the human finger, which are applied directly on the rear surface of the stone tile, or onto an intermediate support layer that has been previously applied to the rear surface of the stone element.

It is used in conjunction with the illumination system, in order to control it, activating or deactivating the system, or, for example, altering the image being shown, when, for example, in conjunction with a LED based illumination system, it can be used to control an associated external system, for example, a heating system, with the set temperature of said heating system being altered by the touch sensing system and shown on the stone element surface, using the illumination system.

The touch sensing system is based on capacitive sensing structures, specifically, on self-capacitive sensors. Self-capacitive systems measure changes in capacitance with respect to earth ground. Considering a parallel-panel model, the electrode forms one panel of a capacitor, with the other panel being either ground or the user's finger, with a touch causing the electrode capacitance to increase.

In the case of the present invention, the touch sensing structures are applied through the application of conductive inks using a printing technology, namely screen printing. All the printed elements are printed resorting to a conductive silver ink (DuPont 5025), with a sheet resistance range between 10 mΩ/sq/mil and 20 mΩ/sq/mil, through a screen-printing process using a 90x40 mesh (90 yarns/cm and 40 µm yarn diameter).

After the layering of the ink over the surface, the set is curated in a thermal oven at approximated temperature of 110 °C for approximately 15 minutes. In the end, a sensory device comprising a thickness between 100 and 150 µm, with capacitances in the range of 10 pF and a minimum 10% capacitance variation when activated is applied on the surface of the stone element.

To prevent the incorrect activation of the touch sensing system, a conductive silver mesh, applied in the same way as the sensing electrode, and using the same ink, was applied around the sensing elements, in order to allow the shielding of the system and protection against electromagnetic interference.

To accommodate these two systems, and allow them to function properly, the stone element, e.g. limestone, must have sufficient mechanical strength to be perforated, with an open porosity between 0,5 and 7%, preferably between 1% and 6%, measured using standard EN 1936:2006 - "Natural stone test methods - Determination of real density and apparent density, and of total and open porosity".

For the lighting system, it is necessary that the stone element allows the creation of channels with a diameter equal to the elements responsible for light transmission, previously described. For the sensing system, the place where the sensing structures are applied, should not have a thickness greater than the separation between the sensing electrode, responsible for creating the electric field used for the detection of the approach or touch on the stone surface by the human finger, and the shield silver mesh.

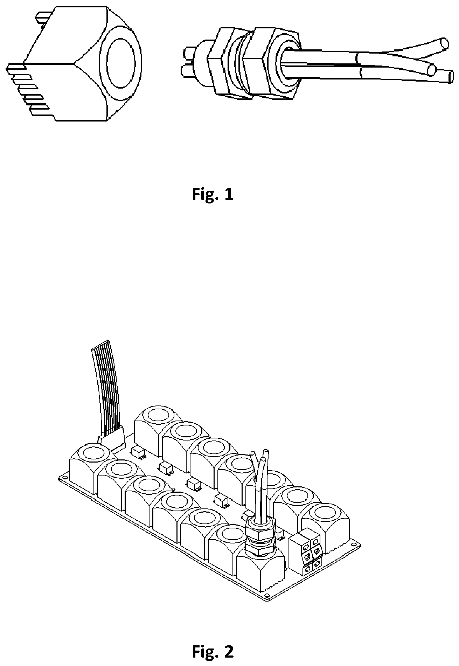

Figure 1 shows a schematic representation of the elements of the natural stone panel with a surface lightning, with a light source (1) and their integration into the support stone tile (2) through at least one fibre optic cable (5) connected to at least one terminal (3) and connector (4).

Figure 2 shows a schematic representation of the printed circuit board with attached light source (1), connector (4) and optic fibre cable (5).

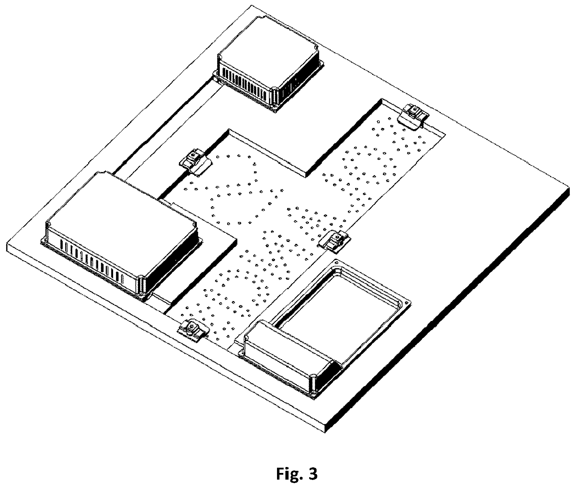

Figure 3 shows a schematic representation of a stone panel to be used to pass a static image, in conjunction with a light source (not represented in the figure). In the center it is possible to identify the openings created in the stone, where the optic fibre is inserted. The other three zones, in the corners, represent the locations where the power and control hardware are placed.

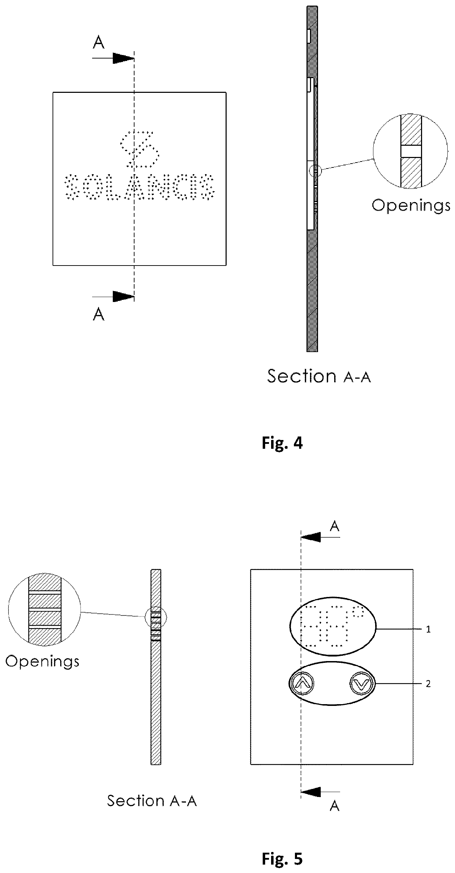

Figure 4 shows a schematic representation of a cross section of the support stone tile (2) shown in the previous figure, allowing the viewing of the openings made to place the optic fibre (5). It is possible to observe the maximum thickness of the stone element (15mm) and the thickness (5mm) in the area illuminated by the electroluminescent devices.

Figure 5 shows a schematic representation of a natural stone panel with various light points (1) used to show informative image, as well as the touch sensing points (2) to control the information displayed.

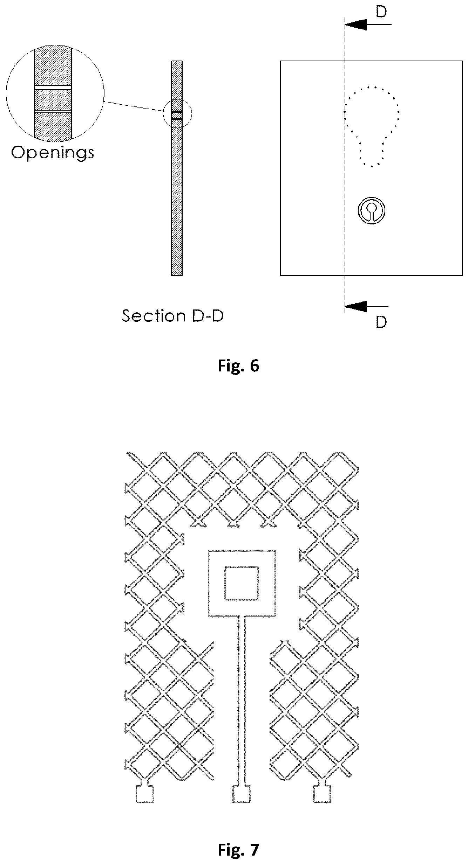

Figure 6 shows a schematic representation of a natural stone panel with various light points used to show a decorative image.

Figure 7 shows a schematic representation of the touch sensing elements applied to the support stone panel (not represented in the figure).

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

## Claims

1. A natural stone panel with a surface lightning for placing into direct contact with ground or wall, comprising:
a support stone tile having front and back surfaces;
a light source placed inside or behind said support stone tile, wherein the light source is selected from a list consisting of electroluminescent film or tape, light-emitting diode (LED), organic light-emitting diode (OLED), quantum dot light-emitting diode (QLED) stripe, or combinations thereof;
at least one light channel created in the interior or behind of the said support stone tile allowing the passage of a light path coming from the light source (1) to at least one opening on the front surface of said support stone panel;
a light guide arranged in said light path for guiding light from said light source to the at least one opening.

2. The natural stone panel according to the previous claim wherein the light source is electroluminescent, preferably a film or tape, more preferably comprising a transparent or translucid layer arranged on the electroluminescent light source, to which the light guide is physically and optically coupled.

3. The natural stone panel according to any of the previous claims wherein the support stone tile is recessed in the back surface to receive the light source and light guide.

4. The natural stone panel according to any of the previous claims, wherein the light guide is an optical fibre, preferably with a polymeric base.

5. The natural stone panel according to any of the previous claims comprising a printed touch-sensitive circuit arranged on a polymeric layer on a back surface of said support stone tile, comprising a plurality of circuit tracks arranged to detect touch events on the support stone panel, preferably being said circuit tracks made of materials with sheet resistivities comprised range between 10 mΩ/sq/mil and 20 mΩ/sq/mil, more preferably being said circuit tracks made of silver, copper, or other metallic elements, or combinations thereof.

6. The natural stone panel according to the previous claim wherein the printed touch-sensitive circuit has one or more openings and the light guide is arranged to go through one of the openings, preferably with a luminous flux of the light source between 13.5 lumens and 126 lumens.

7. The natural stone panel according to any of the previous claims, wherein the light source and/or the printed touch-sensitive polymeric layer are coupled to a control printed circuit board, preferably comprising at least one terminal for connection between the light source and the control printed circuit board, more preferably further comprising a connector for connection of the terminal to the optical fibre.

8. The natural stone panel according to any of the previous claims comprising a power and hardware control located on the back of said support stone tile.

9. The natural stone panel according to any of the previous claims, wherein the support stone tile and/or the optical fibres are coated.

10. The natural stone panel according to any of the previous claims, further comprising at least one rigid panel for maintaining the optical fibre in the right position.

11. The natural stone panel according to any of the previous claims, wherein the optical fibre has a light attenuation along its length lower than 350 db/km, preferably between 100 - 300 db/km.

12. The natural stone panel according to any of the preceding claims, wherein the support stone tile is a sedimentary rock, igneous rock, metamorphic rock, preferably limestone, travertine, marble, basalt, sandstone, gneiss, quartzite, slate, onyx, laterite or granite.

13. The natural stone panel according to any of the previous claims, wherein the support stone panel comprises a porosity between 0,5% and 7%, preferably between 1% and 6%.

14. A Method for manufacturing a natural stone panel with a surface lightning for placing into direct contact with ground or wall as described in any of the claims 1 to 13, said method comprising:
providing a support stone tile;
opening at least one light channel created in the interior of the said tile; introduction of at least one light source in the back of said tile, wherein said light source is substantially aligned with the light channel to allow the passage of a light path.

15. The method according to the previous claim, further comprising the steps of:
printing a touch sensing layer on the surface of said tile, comprising a plurality of distributing tracks;
curing of the pattern at temperatures comprised between 100°C and 150°C, for 10 to 20 minutes.
